# EUROPÄISCHE PATENTSCHRIFT

(11) **EP 2 099 620 B1**
(45) Veröffentlichungstag und Bekanntmachung des Hinweises auf die Patenterteilung: **04.03.2015**
(21) Anmeldenummer: 07821442.6
(22) Anmeldetag: 17.10.2007
(51) Int. Cl.: B60C 11/01, B60C 11/04

(54) **FAHRZEUGLUFTREIFEN**
PNEUMATIC TYRE FOR VEHICLE
BANDAGE PNEUMATIQUE POUR VÉHICULE

(30) Priorität: 06.12.2006 DE 102006057498
(43) Veröffentlichungstag der Anmeldung: 16.09.2009
(73) Patentinhaber: Continental Reifen Deutschland GmbH, 30165 Hannover (DE)
(72) Erfinder: ACKERMANN, Lutz, 38539 Müden (DE); MAGGIORA, Alberto, 30161 Hannover (DE)
(74) Vertreter: Finger, Karsten
(86) Internationale Anmeldenummer: PCT/EP2007/061077
(87) Internationale Veröffentlichungsnummer: WO 2008/068105

(56) Entgegenhaltungen:
- DE-A1- 2 844 853
- JP-A- 4 368 207
- JP-A- 9 132 007
- JP-A- 60 060 009
- JP-A- 2000 006 616
- JP-A- 2004 306 874

## Beschreibung

Die Erfindung betrifft einen Fahrzeugluftreifen mit einem profilierten Laufstreifen mit in Umfangsrichtung umlaufenden Profilelementen, wie Rippen oder Blockreihen, an den schulterseitigen Laufstreifenrändern, welche Profilelemente an ihren axial äußeren Randabschnitten mit einer Vielzahl von im Wesentlichen parallel zueinander verlaufenden und in Querrichtung des Laufstreifens orientierten Einschnitten versehen sind, die auch die schulterseitigen Rippenflanken, welche unter einem Winkel von 5° bis 40° zur radialen Richtung geneigt verlaufen, durchsetzen, *wobei der Einschnittgrund der Einschnitte einer gekrümmten Kurve folgt, welche an der Rippenoberfläche einen Abschnitt aufweist, der im Wesentlichen parallel zur Außenkontur der Rippenflanke verläuft und konvex gekrümmt ist, und einen an der Rippenflanke auslaufenden Abschnitt aufweist, welcher mit der radialen Richtung einen Winkel einschließt, der bis zu 45° größer ist als der Winkel der Rippenflanke.*

Es ist üblich, LKW-Reifen, welche für den Einsatz an nicht angetriebenen Achsen, etwa Lenkachsen, vorgesehen sind, mit einem Laufstreifenprofil zu versehen, welches an seinen Randbereichen jeweils eine umlaufende Rippe aufweist. Diese Rippen werden außenseitig mit einer Vielzahl von im Wesentlichen in Querrichtung verlaufenden Einschnitten geringer Breite versehen, um in diesen Bereichen den Laufstreifenabrieb zu vergleichmäßigen. Die Einschnitte weisen einen Einschnittgrund auf, welcher aus zwei Abschnitten besteht, einem parallel zur Rippenflanke verlaufenden Abschnitt und einem parallel zur Rippenoberfläche verlaufenden Abschnitt. Die Einschnitte neigen beim Betrieb des Reifens dazu, an ihren radial inneren Enden einzureißen, was unerwünscht ist.

*Aus der* JP 09 132007 A *ist ein Fahrzeugluftreifen bekannt, bei dem in den Schulterbereichen des Laufstreifens außerhalb der Bodenaufstandsfläche flache Nuten ausgebildet sind, deren seitliche Kanten in Richtung Laufstreifen in Einschnitte übergehen. Der Einschnittgrund dieser Einschnitte ist über den Großteil seiner Erstreckung konvex gekrümmt. Die* JP 2004 306874 A *zeigt in Draufsicht zickzackförmig verlaufende Einschnitte in den Schulterbereichen eines Reifens, welche einen Einschnittgrund aufweisen, der einer gekrümmten Kurve folgt, die zwei Wendepunkte aufweist, wobei der in die Rippenflanken mündende Abschnitt konvex gekrümmt ist. Die* JP 60 060009 A *offenbart einen Fahrzeugluftreifen mit schulterseitig angeordneten Einschnitten, deren Einschnittgrund gestuft ausgeführt ist. Die* JP 04 368207 A *betrifft einen Fahrzeugluftreifen mit einem Laufstreifen mit schulterseitigen Einschnitten, die einen über ihren gesamten Verlauf konvex gekrümmten Einschnittgrund aufweisen. Ähnliche Ausführungsformen von Einschnitten in Schulterbereichen von Reifen zeigen die* JP 2002 006616 A *und die* DE 28 44 853 A1*.*

Aus der EP-B1-0 333 397 ist ein LKW-Reifen mit einem Laufstreifen bekannt, dessen schulterseitig vorgesehene Blöcke mit Einschnitten versehen sind, welche jeweils einen geneigten Hauptabschnitt und einen weniger geneigten, axial außerhalb des Hauptabschnittes liegenden äußeren Axialabschnitt aufweisen. Derart ausgeführte Einschnitte sollen in diesen Laufstreifenbereichen einen ungleichmäßigen Abrieb vermindern.

Aus der EP-B1-1 127 716 ist ein Fahrzeugluftreifen mit einem gerichteten, laufrichtungsgebunden ausgeführten Profil bekannt, welches Profilblöcke aufweist, die in Folge der laufrichtungsgebundenen Ausführung eine sogenannte vorlaufende Kante und eine sogenannte nachlaufende Kante aufweisen. Eine oder mehrere dieser Blöcke weisen zumindest einen Einschnitt auf, welcher an der nachlaufenden Kante beginnt und sich von der Profiloberfläche in den Block erstreckt. Die Einschnitte können im Querschnitt unterschiedliche Formen aufweisen, beispielsweise rechteckig, dreieckig, trapezförmig oder auch gekrümmt ausgeführt sein, und sollen einen ungleichmäßigen Abrieb der Blöcke im Bereich ihrer nachlaufenden und vorlaufenden Kanten verringern oder sogar vermeiden.

Der Erfindung liegt die Aufgabe zu Grunde, bei einem Reifen der eingangs genannten Art die Einschnitte in den seitlichen Rippen oder Blöcken des Laufstreifens derart auszuführen, dass sie an ihren radial inneren Enden nicht mehr einreißen.

Gelöst wird die gestellte Aufgabe erfindungsgemäß dadurch, dass *der Einschnittgrund einer Kurve mit einem Wendepunkt etwa in der Mitte der radialen Erstreckung des Einschnittes folgt, wobei radial außerhalb des Wendepunktes die Kurve aus dem konvex gekrümmten Abschnitt und radial innerhalb des Wendepunktes aus dem der Rippenflanke auslaufenden Abschnitt besteht, welcher konkav gekrümmt ist.*

Erfindungsgemäß ausgeführte Einschnitte weisen einen Übergang zwischen dem Einschnittgrund und der Rippenflanke auf, welcher das Entstehen von Einrissen in diesem Bereich verhindert.

*Der konvex gekrümmt Abschnitt erleichtert das Bilden eines flachen Auslaufes des Einschnittes an der Rippenaußenflanke.*

Gekrümmte Ausführungen des Einschnittgrundes, die unter einem Winkel verlaufende Abschnitte vermeiden, sind besonders vorteilhaft. Es ist daher insbesondere günstig, wenn der Einschnittgrund einer Kurve folgt, welche gemäß einer oder in Anlehnung an eine Polynomfunktion, insbesondere eine Polynomfunktion dritten Grades, ausgelegt ist. Alternativ dazu kann der Einschnittgrund auch einer Kurve folgen, welche gemäß einer oder in Anlehnung an eine trigonometrische Funktion ausgelegt ist.

Eine weitere Maßnahme, die dazu beiträgt, dass die geschilderten Einrisse verhindert werden, besteht darin, dass der Einschnittgrund, in einem axialen Schnitt betrachtet, gerundet ausgeführt ist.

Weitere Merkmale, Vorteile und Einzelheiten der Erfindung werden nun anhand der Zeichnung, die schematisch Ausführungsbeispiele der Erfindung darstellt, näher beschrieben. Dabei zeigen

Fig. 1 eine Draufsicht auf einen schulterseitigen Abschnitt eines profilierten Laufstreifens eines Fahrzeugluftreifens,

Fig. 2 und Fig. 3 Schnitte entlang der Linie II-II der Fig. 1, *Fig.3* *mit einer Ausführungsvariante der Erfindung,* und Fig. 4 eine Draufsicht auf einen schulterseitigen Abschnitt eines Laufstreifens mit einer weiteren Ausführungsform der Erfindung.

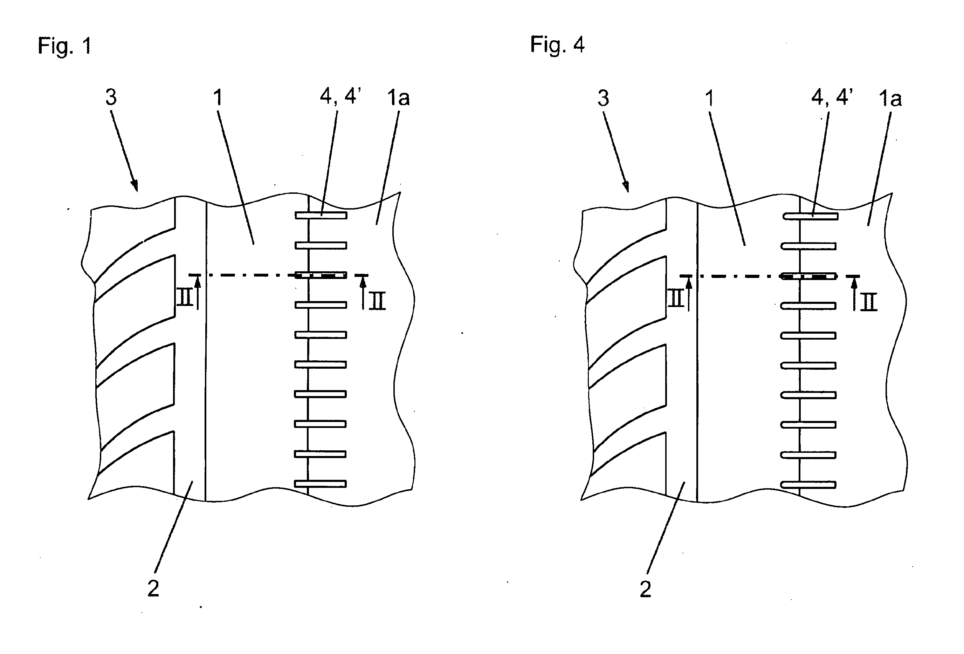

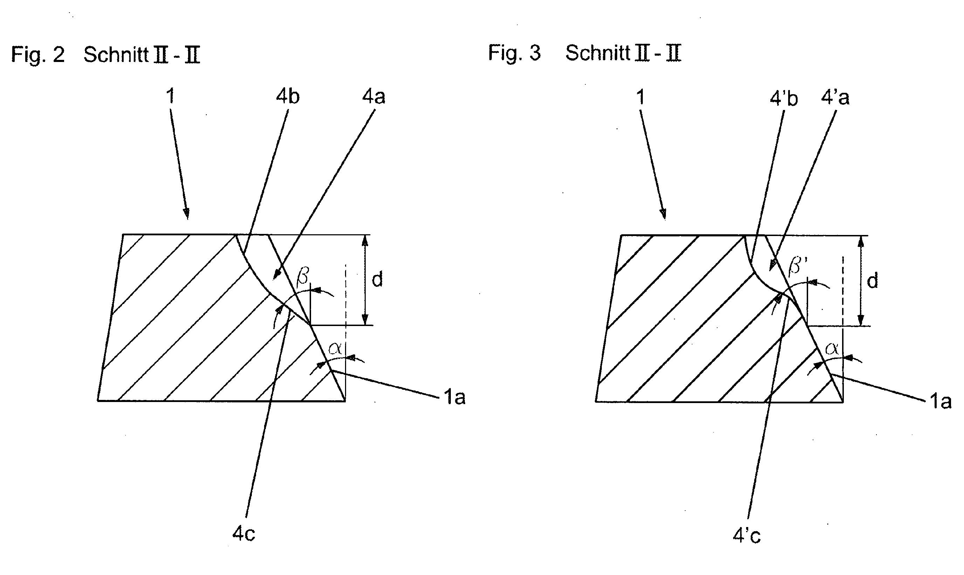

Fig. 1 zeigt eine Draufsicht auf einen schulterseitigen Abschnitt eines Laufstreifens eines LKW-Reifens mit einer umlaufenden Rippe 1 als axial äußerstes Profilelement am seitlichen Rand des Laufstreifens. Die Rippe 1 ist durch eine breite Umfangsnut 2 von weiteren Profilelementen, hier beispielhaft einer in Umfangsrichtung umlaufenden Blockreihe 3, getrennt. LKW-Reifen mit umlaufenden Rippen 1 an den Seitenbereichen des Laufstreifens werden insbesondere als nicht angetriebene Reifen an der Lenkachse eines Fahrzeuges eingesetzt. Der axial äußerste Randabschnitt der Rippe 1 und deren zur Schulter abfallende Rippenflanke 1a sind mit einer Vielzahl von in Draufsicht in Querrichtung bzw. im Wesentlichen im Querrichtung des Laufstreifens verlaufenden Einschnitten 4, 4' versehen, die eine Breite ≥ 0,7 mm aufweisen. Wie die Schnittdarstellungen in Fig. 2 und Fig. 3 zeigen, reichen die Einschnitte 4 in radialer Richtung auf eine Tiefe d, die bis zu 120 % der Profiltiefe beträgt. Die Rippenflanke 1a ist gegenüber der radialen Richtung unter einem Winkel α geneigt, welcher zwischen 5° und 40° beträgt. Die Einschnitte 4, 4' erstrecken sich an der Rippenoberseite etwa 3 mm bis 10 mm in die Rippe 1 hinein.

Der im Rippeninneren befindliche Einschnittgrund 4a, 4'a der Einschnitte 4, 4' folgt gemäß der Erfindung besonders gestalteten Kurven, wobei vor Allem die Auslegung des Auslaufes des Einschnittgrundes 4a, 4'a zur bzw. in die Rippenflanke 1a am unterem bzw. radial inneren Ende von Bedeutung ist, sodass das Auftreten von Einrissen an den radial inneren Enden der Einschnitte 4, 4' vermieden ist.

Bei der in Fig. 2 gezeigten Ausführungsvariante folgt der Einschnittgrund 4a beginnend an der Außenfläche der Rippe 1 einer Kurve, welche vorerst einen Abschnitt 4b aufweist, der etwa parallel zur Außenkontur der Rippenflanke 1 a verläuft. Der Abschnitt 4b geht etwa in der Mitte der radialen Erstreckung des Einschnittes 4 über eine leichte Krümmung in einen Abschnitt 4c über, mit welchem der Einschnitt 4 am radial inneren Ende des Einschnittgrundes 4a an der Rippenflanke 1a endet. Der Winkel β, den der Einschnitt 4 am auslaufenden Punkt an der Rippenflanke 1 a mit der radialen Richtung einschließt, ist um bis zu 45°, insbesondere bis zu 30°, größer als der Winkel α.

Fig. 3 zeigt anhand eines Schnittes durch einen Einschnitt 4' eine Ausführungsvariante der Erfindung. Der Einschnittgrund folgt einer Kurve mit einem Wendepunkt C etwa in der Mitte der radialen Erstreckung des Einschnittes 4', wobei radial außerhalb des Punktes C die Kurve aus einem konvex gekrümmten Abschnitt 4'b und radial innerhalb des Punktes C aus einem konkav gekrümmten Abschnitt 4'c besteht. Der Abschnitt 4'a verläuft im Wesentlichen übereinstimmend zur Rippenflanke 1a. Der Winkel β' des Einschnittes 4' am auslaufenden Punkt an der Rippenflanke 1a ist höchstens gleich groß wie der Winkel α oder geringfügig, um bis zu 5°, größer.

Bevorzugt folgt der Einschnittgrund 4a, 4'a einer Kurve, welche nach oder in Anlehnung an eine Polynomfunktion, beispielsweise der allgemeinen Form y = ax³+ bx² + cx + d, oder an eine trigonometrische Funktion ausgelegt ist.

Zusätzlich ist es, insbesondere bei etwas breiteren Einschnitten 4, 4', möglich, den Einschnittgrund selbst gerundet auszuführen wie es beispielsweise in Fig. 4 an der Rippenoberfläche gezeigt ist. Der Einschnittgrund kann über seine gesamte Erstreckung derart gerundet sein.

Die Erfindung ist auf die dargestellten und beschriebenen Ausführungsvarianten nicht eingeschränkt. So ist es beispielsweise möglich, anstelle der gezeigten Rippenstruktur eine Blockstruktur mit Einschnitten gemäß der Erfindung vorzusehen.

## Patentansprüche

1. Fahrzeugluftreifen mit einem profilierten Laufstreifen mit in Umfangsrichtung umlaufenden Profilelementen, wie Rippen (1) oder Blockreihen, an den schulterseitigen Laufstreifenrändern, welche an ihren axial äußeren Randabschnitten mit einer Vielzahl von im Wesentlichen parallel zueinander verlaufenden und in Querrichtung des Laufstreifens orientierten Einschnitten (4') versehen sind, die auch die schulterseitigen Rippenflanken (1a), welche unter einem Winkel (α) von 5° bis 40° zur radialen Richtung geneigt verlaufen, durchsetzen, *wobei der Einschnittgrund (4'a) der Einschnitte (4') einer gekrümmten Kurve folgt, welche an der Rippenoberfläche einen Abschnitt (4'b) aufweist, der im Wesentlichen parallel zur Außenkontur der Rippenflanke (1a) verläuft und konvex gekrümmt ist, und einen an der Rippenflanke (1a) auslaufenden Abschnitt (4'c) aufweist,*
***dadurch gekennzeichnet,***
***dass*** *der Einschnittgrund (4'a) einer Kurve mit einem Wendepunkt etwa in der Mitte der radialen Erstreckung des Einschnittes (4') folgt, wobei radial außerhalb des Wendepunktes die Kurve aus dem konvex gekrümmten Abschnitt (4'b) und radial innerhalb des Wendepunktes aus dem an der Rippenflanke (1a) auslaufenden Abschnitt (4'c) besteht, welcher konkav gekrümmt ist, und wobei der Winkel (B') des Einschnitts (4') zur radialen Richtung am auslaufenden Punkt an der Rippenflanke (1a) höchstens gleich groß wie der Winkel (*α*) ist oder geringfügig, um bis zu 5°, größer ist*.

2. Fahrzeugluftreifen nach Anspruch 1, **dadurch gekennzeichnet, dass** der Einschnittgrund (4'a) einer Kurve folgt, welche gemäß einer oder in Anlehnung an eine Polynomfunktion, insbesondere einer Polynomfunktion dritten Grades, ausgelegt ist.

3. Fahrzeugluftreifen nach Anspruch 1, **dadurch gekennzeichnet, dass** der Einschnittgrund (4'a) einer Kurve folgt, welche gemäß einer oder in Anlehnung an eine trigonometrischen Funktion ausgelegt ist.

4. Fahrzeugluftreifen nach einem der Ansprüche 1 bis 3, **dadurch gekennzeichnet, dass** der Einschnittgrund (4'a), in einem axialen Schnitt betrachtet, gerundet ausgeführt ist.

## Claims

1. Pneumatic vehicle tyre with a profiled tread comprising profile elements, such as ribs (1) or rows of blocks, which run around in the circumferential direction at the shoulder-side edges of the tread and are provided at their axially outer edge portions with a multiplicity of sipes (4') running substantially parallel to one another and oriented in the transverse direction of the tread, and also passing through the shoulder-side rib flanks (la), which run such that they are inclined in relation to the radial direction at an angle (α) of 5° to 40°, the sipe base (4'a) of the sipes (4') following a curved path, which has at the surface of the ribs a portion (4'b) that runs substantially parallel to the outer contour of the rib flank (la) and is convexly curved, and a portion (4'c) that runs out at the rib flank (la),
**characterized**
**in that** the sipe base (4'a) follows a curve with a point of inflection approximately in the middle of the radial extent of the sipe (4'), the curve consisting radially outside the point of inflection of the convexly curved portion (4'b) and radially inside the point of inflection of the portion (4'c) that runs out at the rib flank (la) and is concavely curved, and the angle (β') of the sipe (4') in relation to the radial direction at the running-out point at the rib flank (la) being at most equal to the angle (α) or slightly greater, by up to 5°.

2. Pneumatic vehicle tyre according to Claim 1, **characterized in that** the sipe base (4'a) follows a curve that is designed according to or on the basis of a polynomial function, in particular a polynomial function of the third degree.

3. Pneumatic vehicle tyre according to Claim 1, **characterized in that** the sipe base (4'a) follows a curve that is designed according to or on the basis of a trigonometric function.

4. Pneumatic vehicle tyre according to one of Claims 1 to 3, **characterized in that**, when viewed in an axial section, the sipe base (4'a) is of a rounded configuration.

## Revendications

1. Bandage pneumatique de véhicule, comprenant une bande de roulement profilée avec des éléments profilés s'étendant sur le pourtour dans la direction périphérique, tels que des nervures (1) ou des rangées de blocs, au niveau des bords de la bande de roulement du côté de l'épaule, lesquels, au niveau de leurs portions de bord axialement extérieures, sont munis d'une pluralité d'entailles (4') s'étendant essentiellement parallèlement les unes aux autres et orientées dans la direction transversale de la bande de roulement, lesquelles traversent également les flancs de nervure (la) du côté de l'épaule, qui s'étendent de manière inclinée suivant un angle (α) de 5° à 40° par rapport à la direction radiale, le fond d'entaille (4'a) des entailles (4') suivant une courbe cintrée qui présente, au niveau de la surface de nervure, une portion (4'b) qui s'étend essentiellement parallèlement au contour extérieur du flanc de nervure (la) et qui a une courbure convexe, et présente une portion (4'c) se terminant au niveau du flanc de nervure (la),
**caractérisé en ce que**
le fond d'entaille (4'a) suit une courbe ayant un point d'inflexion approximativement au centre de l'étendue radiale de l'entaille (4'), la courbe, radialement à l'extérieur du point d'inflexion, se composant de la portion de courbure convexe (4'b) et, radialement à l'intérieur du point d'inflexion, de la portion (4'c) se terminant au niveau du flanc de nervure (la) qui a une courbure concave, et l'angle (β') de l'entaille (4') par rapport à la direction radiale au niveau du point se terminant au niveau du flanc de nervure (la) étant au maximum égal à l'angle (α) ou étant légèrement supérieur à celui-ci, au maximum jusqu'à 5° supérieur à celui-ci.

2. Bandage pneumatique de véhicule selon la revendication 1, **caractérisé en ce que** le fond d'entaille (4'a) suit une courbe qui est conçue selon une fonction polynomiale ou suivant le modèle d'une fonction polynomiale, en particulier une fonction polynomiale du troisième degré.

3. Bandage pneumatique de véhicule selon la revendication 1, **caractérisé en ce que** le fond d'entaille (4'a) suit une courbe qui est conçue selon une fonction trigonométrique ou suivant le modèle d'une fonction trigonométrique.

4. Bandage pneumatique de véhicule selon l'une quelconque des revendications 1 à 3, **caractérisé en ce que** le fond d'entaille (4'a), considéré en coupe axiale, est réalisé sous forme arrondie.
